# EUROPEAN PATENT SPECIFICATION

(11) **EP 0 454 322 B1**
(45) Date of publication and mention of the grant of the patent: **08.02.1995**
(21) Application number: 91303197.7
(22) Date of filing: 11.04.1991
(51) Int. Cl.: F16J 15/46, F04D 29/10

(54) **Means for applying a back pressure to a shaft seal**
Mittel zur Erzeugung eines Vorspanndruckes für Wellendichtungen
Dispositif pour appliquer de la pression hydrostatique sur une étanchéité de l'arbre d'entrainement

(30) Priority: 21.04.1990 GB 9008987
(43) Date of publication of application: 30.10.1991
(73) Proprietor: DAVID BROWN ENGINEERING Ltd., Huddersfield HD4 5DD (GB)
(72) Inventor: Thompson, Peter, Fenay Bridge, Huddersfield HD8 0BP (GB)
(74) Representative: Neill, Alastair William

(56) References cited:
- EP-A- 0 065 922
- DE-A- 3 347 263
- DE-U- 8 814 480
- US-A- 3 471 156

## Description

This invention relates to means for applying a back pressure to a shaft seal, particularly but not exclusively for the drive shaft of process pumps, which are frequently required to pump hazardous fluids. The word "fluids" is herein intended to denote liquids, gases, or mixtures of the two.

Hitherto, a back pressure has been applied to oil in a sealed chamber on that side of the shaft seal remote from the fluid being pumped by two kinds of means. One kind comprises an auxiliary pump and associated control valve means, and has the disadvantage of being very expensive relative to the cost of the process pump. The other known kind of means comprises a heavy piston slidable in a vertical cylinder the upper end of which communicates with the fluid being pumped and the lower end of which communicates with the aforesaid sealed chamber, the piston being urged towards the lower end of the cylinder by the pressure of the fluid being pumped and additionally by its own weight, and being provided with sealing means of rolling diaphragm type which are virtually frictionless. Said other kind of means is considerably cheaper than said one kind, but has the disadvantages that the preponderance of the back pressure over the pressure of the fluid being pumped caused by the weight of the piston is very small, say one pound per square inch (approximately 0.07 kilogrammes per square centimetre), and that the rolling diaphragm seal is easily ruptured if the oil is lost, thereby allowing possibly hazardous fluids to escape to atmosphere.

US-A-3,471,156, summarised in the pre-characterising part of Claim 1, discloses an inflatable packing gland for stuffing boxes utilised around the reciprocal polished rod of a producing oil well. The pressure of the packing member against the outer periphery of the polished rod is automatically maintained to compensate for wear caused by the reciprocal movement of the polished rod against the packing gland. Back pressure is maintained by a pressure regulator which comprises a piston slidable in a cylinder one end of which communicates with the fluid being pumped and the other end of which contains oil communicating with a sealed chamber on that side of the shaft seal remote from said fluid, the piston being urged towards said other end of the cylinder by spring means as well as by the pressure of the fluid being pumped.

The object of the present invention is to provide means which are relatively cheap, which apply a greater preponderance of back pressure, and which practically obviate the possibility of escape of the fluid being pumped.

According to the invention, means are provided for applying a back pressure to a shaft seal of a pump, comprising a piston slidable in a cylinder one end of which communicates with the fluid being pumped and the other end of which contains oil communicating with a sealed chamber on that side of the shaft seal remote from said fluid, the piston being urged towards said other end of the cylinder by spring means as well as by the pressure of the fluid being pumped, characterised in that the piston is provided with sealing means which slide in frictional contact with the cylinder.

A preferred embodiment of the invention will now be described, by way of example only, with reference to the accompanying drawings of which:-
Figure 1 is a sectional side elevation of headgear for a process pump provided with means for applying a back pressure to a shaft seal thereof;
Figure 2 is a sectional side elevation of said means on a larger scale;
Figure 3 is a section side elevation on an even larger scale of a piston in said means showing details of sealing means with which said piston is provided; and
Figure 4 is a sectional side elevation of the shaft seal on a larger scale than Figure 1.

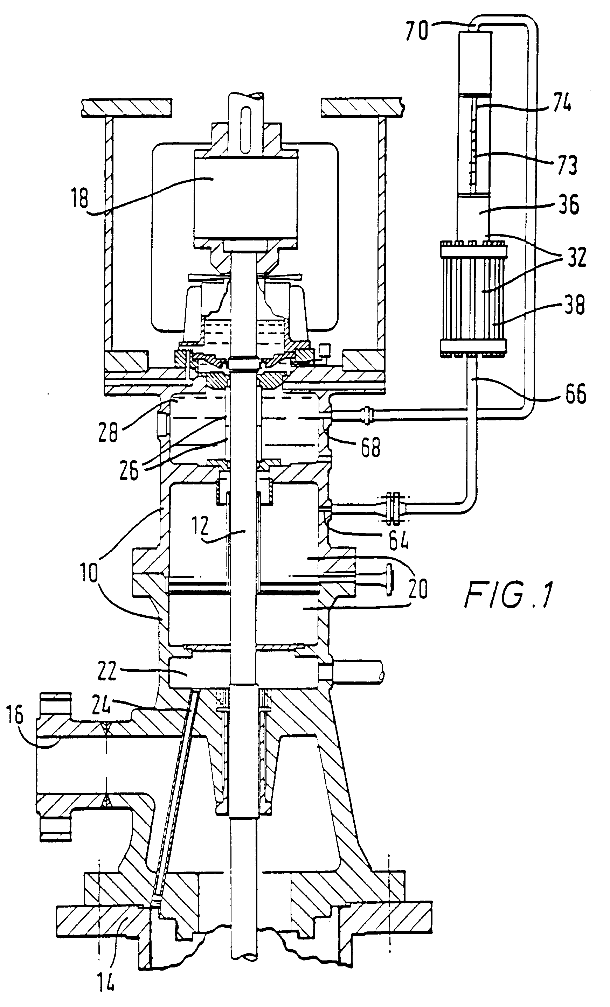

Referring now to the drawings, a centrifugal process pump of well known type has a headgear as shown in Figure 1 which comprises a casing 10 in which there is rotatably mounted a drive shaft 12. The casing 10 is bolted to a generally cylindrical main casing 14 through which the shaft 12 extends axially and within which there is disposed at least one impeller (not shown) secured on the shaft 12. Usually a plurality of impellers acting in series is provided. The pump has an inlet (not shown) in the casing 14 and an outlet 16 in the casing 10. The shaft 12 projects from that end of the casing 10 remote from the casing 14 for connection to an electric motor 18. Interconnected spaces 20, 22 in the casing 10 communicate with the inlet of the pump by way inter alia of a conduit 24.

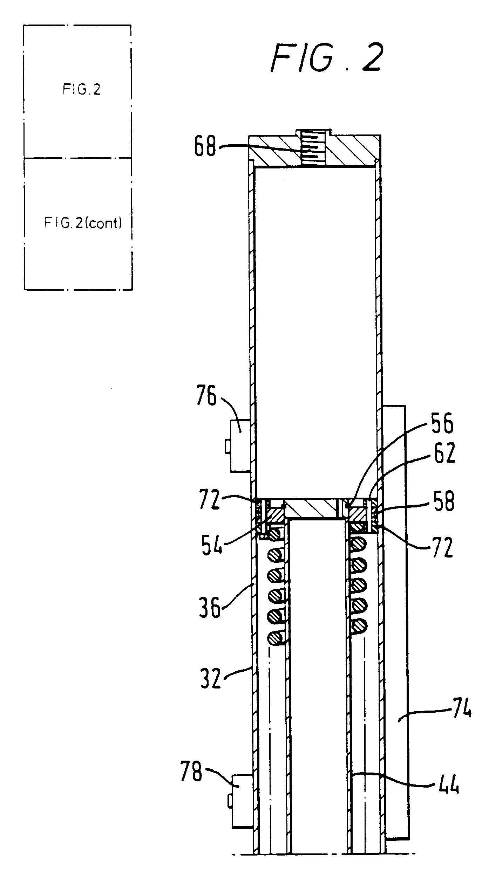

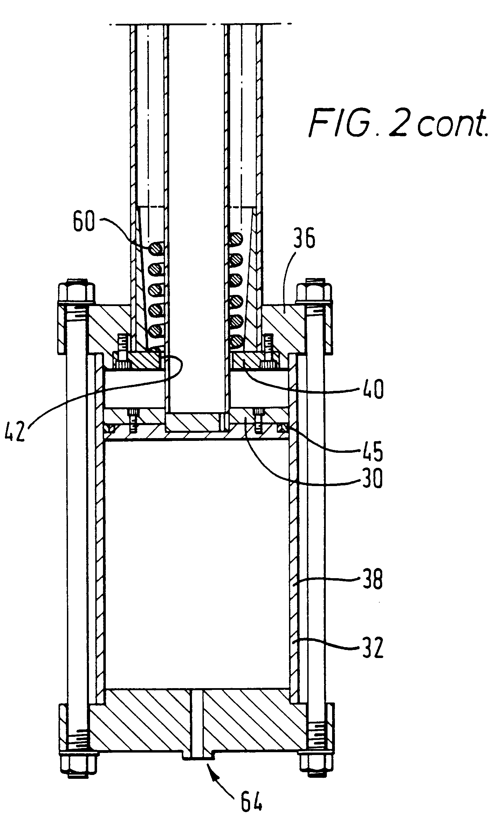

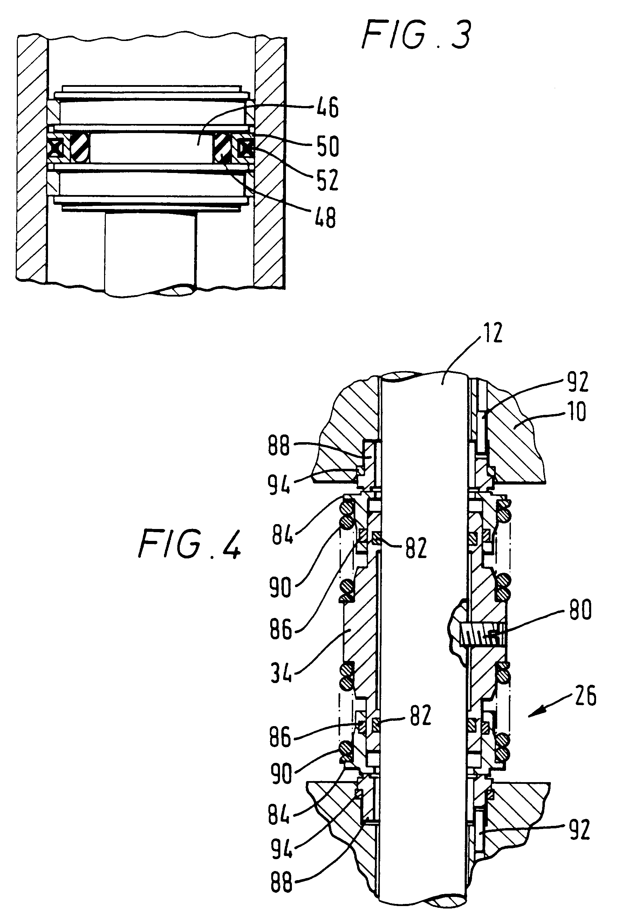

To maintain the pressure in the spaces 20, 22 of the fluid being pumped and to prevent its escape, the shaft 12 has a seal assembly indicated generally at 26 which is subjected to a back pressure greater than the pressure of said fluid. This back pressure is applied to oil in a chamber 28 surrounding the seal assembly 26 by novel means shown in Figure 2 and comprising a piston 30 slidable in a cylinder 32 one end of which communicates with the fluid in said space and the other end of which communicates with said chamber. Referring to Figure 4, the seal assembly 26 is of known so-called double back-to-back type and comprises a sleeve 34 secured to the shaft 12 by a set-screw 80 and having two annular grooves in its bore each of which contains a resilient sealing ring 82. Two rotary sealing collars 84 are slidably mounted on the respective ends of the sleeve 34, and each of said collars has an annular groove in its bore containing a resilient sealing ring 86. The collars 84 are urged into end face contact with respective stationary sealing collars 88 by means of respective oppositely-handed helical compression springs 90 each of which is confined between a shoulder on the sleeve 34 and a shoulder on the respective collar 84. Each collar 88 is slideably mounted in the casing 10 and held against rotation by a pin 92, and a resilient sealing ring 94 is confined between a shoulder on the collar 88 and a shoulder on the casing 10. Due to being of double back-to-back type, the seal assembly 26 contains the back pressure within the chamber 28 as well as maintaining the pressure in the spaces 20, 22 of the fluid being pumped. The cylinder 32 comprises two coaxial portions 36, 38 of different diameters with a wall 40 between them, through a bore 42 in which a piston rod 44 is slidable with appreciable clearance. The piston 30 is rigidly secured on that end of the rod 44 which is disposed within the larger diameter portion 38 of the cylinder 32, and the periphery of the piston 30 is provided with hydraulic sealing means indicated generally at 45 of known type as shown in Figure 3 which slide in frictional contact with the cylinder 32. Said hydraulic sealing means are housed in an annular groove 46 in the piston 30 and comprise an inner resilient O-ring 48, an outer ring 50 of channel-shaped cross-section urged towards the bore of the cylinder 32 by the O-ring 48, and an elastomer ring 52 disposed in the channel of the ring 50. The piston rod 44 also has a disc 54 secured by means of a circlip 56 on that one of its ends within the smaller diameter portion 36 of the cylinder 32, and the periphery of the disc 54 is provided with an anti-friction ring 58 which slides in contact with the cylinder 32. A helical compression spring 60 is confined under compression between the disc 54 and the wall 40 and a vent hole 62 is formed through the disc 54. That end of the larger diameter portion 38 of the cylinder 32 remote from the rod 44 communicates with the fluid being pumped by way of a port 64 and a pipe 66, and that end of the smaller diameter portion 36 of the cylinder 32 remote from the rod 44 communicates with the oil in the chamber 28 by way of a port 68 and a pipe 70. Due to the provision of the vent hole 62 through the disc 54 and the clearance between the rod 44 and the bore 42 in the wall 40, said oil fills all of the cylinder 32 on the rod side of the piston 30. The disc 54 carries annular magnets 72 which control remotely the orientation of each of a series of hinged flaps 73 disposed in a housing 74 secured along the exterior of the smaller diameter portion 36 of the cylinder 32, the sides of the flaps facing towards the larger diameter portion 38 of the cylinder 32 being painted red and those facing in the other direction being the same colour as the exterior of the cylinder 32 so as to provide a visual indication of the position of the disc 54 and thus of the piston 30. The magnets 72 also control remotely one switch 76 disposed on the exterior of the smaller diameter portion 36 of the cylinder 32 which automatically initiates replenishing of the oil when necessary, and another switch 78 disposed on the exterior of said portion which automatically terminates replenishing of the oil.

In operation, the pressure of the fluid being pumped acts upon that side of the piston 30 remote from the rod 44 to create a corresponding pressure in the oil on the other side of the piston 30 which communicates with the chamber 28, and the helical compression spring 60 acts in conjunction with said fluid to create a preponderance of, say, between 1 and 2 bar in the back pressure exerted by said oil over the pressure of the fluid being pumped. If oil gradually seeps from the system, this is indicated by the hinged flaps 73 and ultimately replenished by the two switches 76, 78. If all the oil is lost from the system, the hydraulic sealing means 48, 50, 52 on the piston 30 have sufficient strength to prevent any escape to atmosphere of the possibly hazardous fluid being pumped by way of that side of the piston 30 adjacent the rod 44 and the chamber 28 with which said side communicates.

In one modification, the oil is not replenished automatically and the magnets 72 control a single switch disposed on the exterior of the smaller diameter portion 36 of the cylinder 32 which operates a remote warning signal when replenishment is needed. In another modification, the helical compression spring 60 is replaced by a stack of disc springs.

## Claims

1. Means for applying a back pressure to a shaft seal (26) of a pump or the like, comprising a piston (30) slidable in a cylinder (32) one end of which communicates with the fluid being pumped and the other end of which contains oil communicating with a sealed chamber (28) on that side of the shaft seal (26) remote from said fluid, the piston (30) is urged towards said other end of the cylinder (32) by spring means (60) as well as by the pressure of the fluid being pumped, characterised in that the piston (3) is provided with sealing means (45) which slide in frictional contact with the cylinder (32).

2. Means according to Claim 1, further characterised in that the spring means (60) comprise a helical compression spring.

3. Means according to Claim 1, further characterised in that the spring means (60) comprise a stack of disc springs.

4. Means according to any one of the preceding Claims, further characterised in that the piston (30) carries a magnet (72) which enables its position in the cylinder (32) to be sensed remotely.

5. Means according to Claim 4, further characterised in that the magnet (72) controls the orientation of each of a series of hinged flaps disposed along the exterior of the cylinder (32), the sides of the flaps facing in one direction being a different colour to those facing in the other direction to provide a visual indication of the position of the piston (30).

6. Means according to Claim 4 or Claim 5, further characterised in that the magnet (72) controls one switch (76) disposed on the exterior of the cylinder (32) which automatically initiates replenishing of the oil when necessary, and another switch (78) disposed on the exterior of the cylinder (32) which automatically terminates replenishing of the oil.

7. Means according to Claim 4 or Claim 5, further characterised in that the magnet (72) controls a switch disposed on the exterior of the cylinder (32) which operates a remote warning signal when the oil needs replenishing.

## Patentansprüche

1. Einrichtung zum Erzeugen eines Vorspanndrucks auf eine Wellendichtung (26) einer Pumpe oder dergleichen, die einen Kolben (30) umfaßt, der in einem Zylinder (32) verschiebbar ist, dessen eines Ende mit dem gepumpten Fluid in Verbindung steht, und dessen anderes Ende Öl enthält, das mit einer abgedichteten Kammer (28) auf der Seite der Wellendichtung (26) in Verbindung steht, die von dem Fluid entfernt ist, wobei der Kolben (30) durch Federeinrichtungen (60) sowie durch den Druck des gepumpten Fluids auf das andere Ende des Zylinders (32) zu gedrückt wird, **dadurch gekennzeichnet**, daß der Kolben (3) mit Dichtungseinrichtungen (45) versehen ist, die in Reibungskontakt mit dem Zylinder (32) gleiten.

2. Einrichtung nach Anspruch 1, des weiteren **dadurch gekennzeichnet**, daß die Federeinrichtungen (60) eine Spiraldruckfeder umfassen.

3. Einrichtung nach Anspruch 1, des weiteren **dadurch gekennzeichnet**, daß die Federeinrichtungen (60) einen Stapel Tellerfedern umfassen.

4. Einrichtung nach einem der vorangehenden Ansprüche, des weiteren **dadurch gekennzeichnet**, daß der Kolben (30) einen Magneten (72) trägt, der die Fernerfassung seiner Position in dem Zylinder (32) ermöglicht.

5. Einrichtung nach Anspruch 4, des weiteren **dadurch gekennzeichnet**, daß der Magnet (72) die Ausrichtung jeder einer Reihe schwenkbarer Klappen steuert, die an der Außenseite des Zylinders (32) angeordnet sind, wobei die Seiten der Klappen, die in eine Richtung zeigen, eine andere Farbe haben als die, die in die andere Richtung zeigen, so daß die Position des Kolbens (30) optisch angezeigt wird.

6. Einrichtung nach Anspruch 4 oder Anspruch 5, des weiteren **dadurch gekennzeichnet**, daß der Magnet (72) einen an der Außenseite des Zylinders (32) angeordneten Schalter (76) steuert, der automatisch das Auffüllen des Öls auslöst, wenn dies erforderlich ist, sowie einen weiteren an der Außenseite des Zylinders (32) angeordneten Schalter (78), der automatisch das Auffüllen des Öls beendet.

7. Einrichtung nach Anspruch 4 oder Anspruch 5, des weiteren **dadurch gekennzeichnet**, daß der Magnet (72) einen an der Außenseite des Zylinders (32) angeordneten Schalter steuert, der ein Fernwarnsignal auslöst, wenn das Öl nachgefüllt werden muß.

## Revendications

1. Moyens destinés à appliquer une contre-pression à un joint d'étanchéité d'arbre (26) d'une pompe ou d'un appareil similaire, comprenant un piston (30) apte à coulisser dans un cylindre (32) dont l'une des extrémités communique avec le fluide pompé et dont l'autre extrémité contient de l'huile en communication avec une chambre fermée hermétiquement (28) du côté du joint d'étanchéité d'arbre (26), éloigné dudit fluide, le piston (30) étant sollicité en direction de ladite autre extrémité du cylindre (32) par des moyens élastiques (60) ainsi que par la pression du fluide pompé, caractérisés en ce que le piston (30) est muni de moyens d'étanchéité (45) qui coulissent en étant en contact à frottement avec le cylindre (32).

2. Moyens selon la revendication 1, également caractérisés en ce que les moyens élastiques (60) comprennent un ressort de compression à boudin.

3. Moyens selon la revendication 1, également caractérisés en ce que les moyens élastiques (60) comprennent un empilement de ressorts à disques.

4. Moyens selon l'une quelconque des revendications précédentes, également caractérisés en ce que le piston (30) porte un aimant (72) permettant de détecter à distance sa position dans le cylindre (32).

5. Moyens selon la revendication 4, également caractérisés en ce que l'aimant (72) commande l'orientation de chacun d'une série de volets articulés, disposés le long de la partie extérieure du cylindre (32), les faces des volets tournées dans un sens étant d'une couleur différente de celle des faces tournées dans l'autre sens, pour fournir une indication visuelle de la position du piston (30).

6. Moyens selon la revendication 4 ou la revendication 5, également caractérisés en ce que l'aimant (72) commande un premier commutateur (76) disposé sur la partie extérieure du cylindre (32), qui déclenche automatiquement un ravitaillement en huile, lorsque celui-ci est nécessaire, et un second commutateur (78) disposé sur la partie extérieure du cylindre (32), qui stoppe automatiquement le ravitaillement en huile.

7. Moyens selon la revendication 4 ou la revendication 5, également caractérisés en ce que l'aimant (72) commande un commutateur disposé sur la partie extérieure du cylindre (32), qui actionne un signal d'alarme à distance, lorsqu'un ravitaillement en huile est nécessaire.
